# EUROPÄISCHE PATENTSCHRIFT

(11) **EP 3 394 707 B1**
(45) Veröffentlichungstag und Bekanntmachung des Hinweises auf die Patenterteilung: **08.01.2020**
(21) Anmeldenummer: 16797566.3
(22) Anmeldetag: 17.11.2016
(51) Int. Cl.: G06F 3/01, G02B 27/01, G09G 5/37, G06T 19/00

(54) **VERFAHREN ZUM BETREIBEN EINES VIRTUAL-REALITY-SYSTEMS UND VIRTUAL-REALITY-SYSTEM**
METHOD FOR OPERATING A VIRTUAL REALITY SYSTEM, AND VIRTUAL REALITY SYSTEM
PROCÉDÉ DE FONCTIONNEMENT D'UN SYSTÈME DE RÉALITÉ VIRTUELLE ET SYSTÈME DE RÉALITÉ VIRTUELLE ASSOCIÉ

(30) Priorität: 22.12.2015 DE 102015226585
(43) Veröffentlichungstag der Anmeldung: 31.10.2018
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2016/077971
(87) Internationale Veröffentlichungsnummer: WO 2017/108287

(56) Entgegenhaltungen:
- US-A1- 2002 190 989
- US-A1- 2005 024 388
- US-A1- 2008 043 022
- Anonymous: "How to make the MainCamera 'far clipping plane' a Sphere - Unity Answers", , 1. Februar 2014 (2014-02-01), XP055334199, Gefunden im Internet: URL:http://answers.unity3d.com/questions/6 29779/how-to-make-the-maincamera-far-clipp ing-plane-a-sp.html [gefunden am 2017-01-11]

## Beschreibung

Die Erfindung betrifft ein Verfahren zum Betreiben eines Virtual-Reality-Systems und ein Virtual-Reality-System.

Mittels eines Virtual-Reality-Systems kann eine virtuelle Realität dargestellt werden, wobei als virtuelle Realität üblicherweise die Darstellung und gleichzeitige Wahrnehmung der Wirklichkeit in ihren physikalischen Eigenschaften in einer in Echtzeit computergenerierten, interaktiven virtuellen Umgebung bezeichnet wird.

Virtual-Reality-Systeme können eine Virtual-Reality-Brille zum Anzeigen einer virtuellen Umgebung aufweisen. Bei einer Virtual-Reality-Brille handelt es sich um eine bestimmte Form eines sogenannten Head-Mounted-Displays, bei welchem es sich um ein auf dem Kopf getragenes visuelles Ausgabegerät handelt. Es präsentiert Bilder auf einem augennahen Bildschirm oder projiziert sie direkt auf die Netzhaut. Eine Virtual-Reality-Brille hat dabei zusätzlich noch Sensoren zur Bewegungserfassung des Kopfes. Damit kann die Anzeige einer berechneten Grafik an die Bewegungen eines Träger der Virtual-Reality-Brille angepasst werden. Durch die körperliche Nähe wirken die angezeigten Bildflächen von Head-Mounted-Displays erheblich größer als die freistehender Bildschirme und decken im Extremfall sogar das gesamte Sichtfeld des Benutzers ab. Da jeweilige Displays von Virtual-Reality-Brillen durch die Kopfhaltung allen Kopfbewegungen eines Trägers folgen, bekommt er das Gefühl, sich direkt in einer von einem Computer erzeugten Bildlandschaft zu bewegen.

Üblicherweise kann eine Person, welche eine Virtual-Reality-Brille aufgesetzt hat, sich in einem bestimmten Erfassungsbereich bewegen, innerhalb welchem eine zuverlässige Positionserfassung der Virtual-Reality-Brille und somit auch der Person möglich ist. In Folge dessen können Bewegungen der Person in entsprechende virtuelle Bewegungen innerhalb einer mittels der Virtual-Reality-Brille angezeigten virtuellen Umgebung umgesetzt werden. Beispielsweise kann dadurch ein innerhalb der virtuellen Umgebung angezeigtes virtuelles Objekt, zum Beispiel ein virtuelles Kraftfahrzeug, aus verschiedenen virtuellen Beobachtungspositionen begutachtet werden.

Dabei kann es bei einer entsprechenden Bewegung der Person, welche die Virtual-Reality-Brille aufgesetzt hat, vorkommen, dass diese sich innerhalb der virtuellen Umgebung durch das angezeigte virtuelle Objekt hindurch bewegt. Dies kann bei der Person ein unangenehmes Gefühl erzeugen, da sie sich durch simulierte feste Materie, zum Beispiel durch eine virtuelle Fahrzeugtür, hindurchbewegt. Dies widerspricht dem üblicherweise erlernten menschlichen Verhalten, Kollisionen mit Objekten zu vermeiden. Die Kollision tritt zwar nicht real ein, aber das Bewusstsein nimmt wahr, dass etwas nicht stimmt, wodurch im besten Fall nur die Immersion gestört oder im schlimmsten Fall Unwohlsein oder Übelkeit bei der Person erzeugt wird.

Die US 2005/024388 A1 zeigt ein Verfahren zum Anzeigen virtueller Inhalte mittels eines oder mehrerer Head-Mounted-Displays. Dabei ist es vorgesehen, ein visuelles Sichtfeld zu definieren, welches in Form einer Pyramide mit einer rechteckigen Grundfläche definiert ist. Die Pyramidenspitze erstreckt sich dabei von einer virtuellen Beobachtungsposition des Trägers des Head-Mounted-Displays aus und weitet sich dann immer weiter auf. Sogenannte Clippingebenen ("cllipping surface") sind innerhalb des Sichtfelds, also der Pyramide, definiert. Innerhalb der Pyramidenspitze selbst und in allen sonstigen Bereichen außerhalb von der Pyramide werden keine virtuellen Objekte angezeigt. Zudem umgibt der Pyramidenstumpf die virtuelle Beobachtungsposition ("view point 301") nicht. Es wird also lediglich innerhalb des unteren bzw. hinteren Pyramidenstumpfs überhaupt etwas angezeigt.

Es ist daher die Aufgabe der vorliegenden Erfindung, ein Verfahren zum Betreiben eines Virtual-Reality-Systems sowie ein Virtual-Reality-System bereitzustellen, mittels welchen virtuelle Kollisionen mit in einer virtuellen Umgebung angezeigten virtuellen Objekten vermieden werden können.

Diese Aufgabe wird durch ein Verfahren zum Betreiben eines Virtual-Reality-Systems sowie durch ein Virtual-Reality-System mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Virtual-Reality-Systems wird eine Position einer Virtual-Reality-Brille mittels einer Erfassungseinrichtung erfasst. Zudem wird eine virtuelle Beobachtungsposition in Abhängigkeit von der erfassten Position der Virtual-Reality-Brille vorgegeben. Des Weiteren wird ein virtueller Hüllkörper vorgegeben, der die virtuelle Beobachtungsposition zumindest teilweise umgibt. Ein in einer virtuellen Umgebung angeordnetes virtuelles Objekt wird aus der vorgegebenen virtuellen Beobachtungsposition angezeigt, wobei solange ein Teil des virtuellen Objekts in den virtuellen Hüllkörper eingetaucht ist, dieser Teil zumindest teiltransparent angezeigt wird.

In Abhängigkeit von der fortlaufend erfassten Position der Virtual-Reality-Brille wird also die virtuelle Beobachtungsposition vorgegeben, aus welcher mittels der Virtual-Reality-Brille das in der virtuellen Umgebung angeordnete virtuelle Objekt angezeigt wird. Aus der erfassten Position der Virtual-Reality-Brille kann auf eine entsprechende Position einer Person geschlossen werden, welche die Virtual-Reality-Brille aufgesetzt hat. Vorzugsweise wird anhand der erfassten Position der Virtual-Reality-Brille eine Augenposition des Trägers der Virtual-Reality-Brille ermittelt. Korrespondierend zur ermittelten Augenposition des Trägers der Virtual-Reality-Brille wird die virtuelle Beobachtungsposition vorgegeben. Die virtuelle Beobachtungsposition entspricht mit anderen Worten also einer virtuellen Augenposition, aus welcher der Träger der Virtual-Reality-Brille die virtuelle Umgebung mitsamt dem darin angeordneten virtuellen Objekt angezeigt bekommt. Der Hüllkörper umgibt dabei die virtuelle Beobachtungsposition zumindest teilweise, was auch beispielsweise so umgesetzt werden kann, dass der virtuelle Hüllkörper einen virtuellen Kopf des Trägers der Virtual-Reality-Brille innerhalb der virtuellen Umgebung zumindest teilweise umgibt.

Bewegt sich der Träger der Virtual-Reality-Brille in der Realität, so bewegt er sich automatisch auch in der mittels der Virtual-Reality-Brille angezeigten virtuellen Umgebung entsprechend. Um zu verhindern, dass der Träger der Virtual-Reality-Brille innerhalb der angezeigten virtuellen Umgebung mit dem angezeigten virtuellen Objekt kollidiert oder sich sogar durch dieses hindurchbewegt, ist es erfindungsgemäß vorgesehen, dass der Teil des virtuellen Objekts zumindest teiltransparent angezeigt wird, welcher in den virtuellen Hüllkörper eingetaucht ist. Durch das zumindest teiltransparente Anzeigen des Teils des virtuellen Objekts, welches in den virtuellen Hüllkörper eingetaucht ist, wird der Träger der Virtual-Reality-Brille frühzeitig darüber in Kenntnis gesetzt, dass er gleich im Begriff ist, innerhalb der virtuellen Umgebung virtuell mit dem virtuellen Objekt zu kollidieren oder sogar sich durch dieses hindurchzubewegen. Dadurch, dass der in den virtuellen Hüllkörper eintauchende Teil des virtuellen Objekts dabei nicht gleich vollständig ausgeblendet wird, geht der Bezug dieses Teils zum gesamten virtuellen Objekt nicht verloren. Dadurch wird auch der in den Hüllkörper eintauchende Teil des virtuellen Objekts als zusammengehörig zu dem restlichen virtuellen Objekt wahrgenommen.

Durch das erfindungsgemäße Verfahren kann also zum einen der Träger der Virtual-Reality-Brille frühzeitig gewarnt werden, wenn er im Begriff ist, mit dem angezeigten virtuellen Objekt zu kollidieren oder sogar durch dieses hindurchzulaufen. Zum anderen wird der Träger der Virtual-Reality-Brille in seiner möglichst realitätsnahen Wahrnehmung der virtuellen Umgebung und des darin angeordneten virtuellen Objekts nur sehr wenig beeinträchtigt.

Eine vorteilhafte Ausführungsform der Erfindung sieht vor, dass der virtuelle Hüllkörper kugelförmig vorgegeben wird, wobei der Mittelpunkt des Hüllkörpers an der virtuellen Beobachtungsposition angeordnet wird. Der virtuelle Hüllkörper kann beispielsweise aber auch eine andere sphärische Form aufweisen. Vorzugsweise umgibt der virtuelle Hüllkörper also die virtuelle Beobachtungsposition vollständig, welche wie gesagt eine Art virtuelle Augenposition des Trägers der Virtual-Reality-Brille darstellt. Innerhalb der angezeigten virtuellen Umgebung ist also quasi der virtuelle Kopf des Trägers der Virtual-Reality-Brille kugelförmig von dem virtuellen Hüllkörper umgeben. Beim Verschwenken der Virtual-Reality-Brille wird automatisch auch die virtuelle Blickrichtung innerhalb der virtuellen Umgebung verschwenkt, so dass sich die virtuelle Perspektive auf das angezeigte virtuelle Objekt verändert. Vor allem wenn der virtuelle Hüllkörper kugelförmig vorgegeben wird und der Mittelpunkt des Hüllkörpers an der virtuellen Beobachtungsposition angeordnet wird, kann der Träger der Virtual-Reality-Brille auch bei schnellen Verschwenkbewegungen der Virtual-Reality-Brille in alle möglichen Richtungen rechtzeitig darüber in Kenntnis gesetzt werden, wenn er gerade im Begriff ist, innerhalb der virtuellen Umgebung mit dem virtuellen Objekt zu kollidieren oder durch dieses hindurchzutauchen.

Es ist zudem erfindungsgemäß vorgesehen, dass der gesamte Teil des Objekts umso transparenter angezeigt wird, je weiter dieser in den Hüllkörper eintaucht. Der Träger der Virtual-Reality-Brille erkennt dadurch auf besonders einfache Weise, wie sehr er sich innerhalb der virtuellen Umgebung dem virtuellen Objekt genähert hat, noch bevor er das virtuelle Objekt berührt bzw. mit diesem kollidiert. Denn der Träger der Virtual-Reality-Brille wird bestrebt sein, das gesamte virtuelle Objekt möglichst nicht transparent angezeigt zu bekommen, so dass er automatisch seinen virtuellen Abstand von dem virtuellen Objekt vergrößern wird.

Alternativ sieht die Erfindung vor, dass die Transparenz des Teils des virtuellen Objekts von einem eine Grenze des Hüllkörpers schneidenden Bereich zu einem am tiefsten in den Hüllkörper eintauchenden Bereich immer stärker zunehmend angezeigt wird. Mit anderen Worten nimmt also der Grad der Transparenz von dem die Grenze des Hüllkörpers schneidenden Bereich zum am tiefsten in den Hüllkörper eintauchenden Bereich immer stärker zu. Die Transparenz kann beispielsweise linear mit der Eintauchtiefe in den Hüllkörper zunehmen. Dadurch kann der Träger der Virtual-Reality-Brille auf besonders einfache Weise erkennen, mit welchem Bereich des virtuellen Objekts er am ehesten kollidieren wird, so dass er seine reale Bewegung entsprechend anpassen kann, um seinen virtuellen Abstand zu dem angezeigten virtuellen Objekt derart zu verändern, dass er mit keinem Teil des virtuellen Objekts kollidiert oder durch diesen hindurchtaucht.

Gemäß einer weiteren vorteilhaften Ausführungsform der Erfindung ist es vorgesehen, dass sobald der Teil des virtuellen Objekts eine vorgegebene Eintauchtiefe in den Hüllkörper überschreitet, ein Bauteil oder eine Baugruppe, zu welchem der Teil des virtuellen Objekts gehört, vollständig ausgeblendet wird. Dadurch wird eine besonders gute Warnfunktion für den Träger der Virtual-Reality-Brille bereitgestellt, da er bei zu starker Annäherung an das virtuelle Objekt durch Ausblenden des entsprechenden Bauteils oder der Baugruppe, zu welchem der Teil des virtuellen Objekts gehört, unmissverständlich darauf hingewiesen wird, dass er gleich im Begriff ist, mit dem virtuellen Objekt zu kollidieren. Zudem wird dadurch, sofern die Person sich dem Teil des virtuellen Objekts dennoch weiter annähern sollte, verhindert, dass die Person mit diesem Teil des virtuellen Objekts kollidieren kann. Außerdem ergibt sich dadurch, dass ein ganzes Bauteil bzw. eine ganze Baugruppe ausgeblendet wird, weiterhin eine relativ realistische Darstellung des angezeigten virtuellen Objekts.

In weiterer vorteilhafter Ausgestaltung der Erfindung ist es vorgesehen, dass als das virtuelle Objekt ein virtuelles Kraftfahrzeug angezeigt wird. In diesem Zusammenhang ist es vorgesehen, dass falls das virtuelle Kraftfahrzeug in einer Innenansicht angezeigt wird, der Hüllkörper kleiner vorgegeben wird, als wenn das virtuelle Kraftfahrzeug in einer Außenansicht angezeigt wird. Denn sollte sich der Träger der Virtual-Reality-Brille beispielsweise das virtuelle Cockpit des virtuellen Kraftfahrzeugs anschauen, so können schon relativ kleine Bewegungen des Trägers der Virtual-Reality-Brille dazu führen, dass er in entsprechende virtuelle Bauteile des Cockpits des Kraftfahrzeugs eintaucht. Sollte das virtuelle Kraftfahrzeug hingegen in einer virtuellen Außenansicht angezeigt werden, so ist das Risiko wesentlich geringer, dass der Träger der Virtual-Reality-Brille virtuell in Komponenten des virtuellen Kraftfahrzeugs eintaucht. Durch die Anpassung der Größe des Hüllkörpers in Abhängigkeit davon, ob das virtuelle Kraftfahrzeug von innen oder von außen angezeigt wird, kann sichergestellt werden, dass der Träger der Virtual-Reality-Brille zum einen rechtzeitig genug davor gewarnt wird, dass er gleich mit dem angezeigten virtuellen Kraftfahrzeug kollidieren wird, zum anderen kann dadurch aber auch sichergestellt werden, dass die realitätsnahe Darstellung des virtuellen Kraftfahrzeugs nicht über die Maßen stark eingeschränkt wird, indem Teile des virtuellen Kraftfahrzeugs zu frühzeitig teiltransparent angezeigt oder ausgeblendet werden. Im Falle eines kugelförmigen Hüllkörpers kann beispielsweise der Radius des Hüllkörpers im Falle einer Innenansicht kleiner als bei einer Außenansicht des virtuellen Kraftfahrzeugs vorgegeben werden. Bei anderen Formgebungen des Hüllköpers wird dieser in analoger Weise entsprechend kleiner oder größer vorgegeben.

Das erfindungsgemäße Virtual-Reality-System umfasst eine Virtual-Reality-Brille und eine Erfassungseinrichtung, welche dazu ausgelegt ist, eine Position der Virtual-Reality-Brille zu erfassen. Des Weiteren umfasst das Virtual-Reality-System eine Steuereinrichtung, welche dazu ausgelegt ist, eine virtuelle Beobachtungsposition in Abhängigkeit von der erfassten Position der Virtual-Reality-Brille vorzugeben. Des Weiteren ist die Steuereinrichtung dazu ausgelegt, einen virtuellen Hüllkörper, der die virtuelle Beobachtungsposition zumindest teilweise umgibt, vorzugeben. Schließlich ist die Steuereinrichtung noch dazu ausgelegt, die Virtual-Reality-Brille derart anzusteuern, dass mittels dieser ein in einer virtuellen Umgebung angeordnetes virtuelles Objekt aus der virtuellen Beobachtungsposition angezeigt wird und solange ein Teil des virtuellen Objekts in den virtuellen Hüllkörper eingetaucht ist, dann dieser Teil zumindest teiltransparent angezeigt wird. Zudem ist die Steuereinrichtung dazu ausgelegt, die Virtual-Reality-Brille derart anzusteuern, dass solange ein Teil des virtuellen Objekts in den virtuellen Hüllkörper eingetaucht ist, dieser Teil zumindest teiltransparent angezeigt wird. Ferner ist die Steuereinrichtung dazu ausgelegt, die Virtual-Reality-Brille derart anzusteuern, dass der gesamte Teil des virtuellen Objekts umso transparenter angezeigt wird, je weiter dieser in den Hüllkörper eintaucht, oder die Transparenz des Teils des virtuellen Objekts von einem eine Grenze des Hüllkörpers schneidenden Bereich zu einem am tiefsten in den Hüllkörper eintauchenden Bereich immer stärker zunehmend angezeigt wird. Vorteilhafte Ausgestaltungen des erfindungsgemäßen Verfahrens sind dabei als vorteilhafte Ausgestaltungen des erfindungsgemäßen Virtual-Reality-Systems anzusehen, wobei das Virtual-Reality-System insbesondere Mittel zur Durchführung der Verfahrensschritte aufweist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombination sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig.1: eine schematische Darstellung eines Virtual-Reality-Systems, welches eine Virtual-Reality-Brille, eine Erfassungseinrichtung zur Positionserfassung der Virtual-Reality-Brille und eine Steuereinrichtung zur Ansteuerung der Virtual-Reality-Brille aufweist;
- Fig. 2: eine schematische Perspektivansicht eines Erfassungsbereichs, in welchem eine Person mit der aufgesetzten Virtual-Reality-Brille dargestellt ist; und in
- Fig. 3: eine schematische Perspektivansicht einer mittels der VirtualReality-Brille angezeigten virtuellen Umgebung, innerhalb welcher ein virtuelles Kraftfahrzeug angeordnet ist, wobei eine virtuelle Beobachtungsposition der Person, welche die Virtual-Reality-Brille aufgesetzt hat, gekennzeichnet ist.

In den Figuren werden gleiche oder funktionsgleiche Elemente mit gleichen Bezugszeichen versehen.

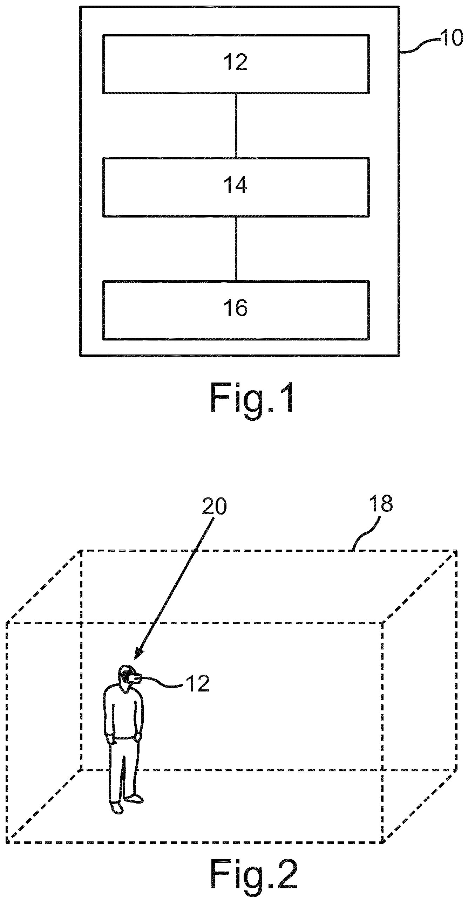

Ein Virtual-Reality-System 10 ist in einer schematischen Darstellung in Fig. 1 gezeigt. Das Virtual-Reality-System 10 umfasst eine Virtual-Reality-Brille 12, eine Steuereinrichtung 14 zum Ansteuern der Virtual-Reality-Brille 12 sowie eine Erfassungseinrichtung 16 zur Positionserfassung der Virtual-Reality-Brille 12.

In Fig. 2 ist ein Erfassungsbereich 18 in einer schematischen Perspektivansicht gezeigt, wobei sich eine Person 20 mit der aufgesetzten Virtual-Reality-Brille 12 in dem Erfassungsbereich 18 aufhält. Solange sich die Person 20 in dem Erfassungsbereich 18 aufhält, kann eine Position und Ausrichtung der Virtual-Reality-Brille 12 zuverlässig mittels der Erfassungseinrichtung 16 erfasst werden. Basierend auf der Erfassung der Position und Ausrichtung der Virtual-Reality-Brille 12 ist es möglich, auch auf eine Position und Ausrichtung der Person 20 zu schließen. Insbesondere ist es unter Berücksichtigung der bekannten Position und Ausrichtung der Virtual-Reality-Brille 12 möglich, eine Position und Ausrichtung der Augen der Person 20 zu ermitteln.

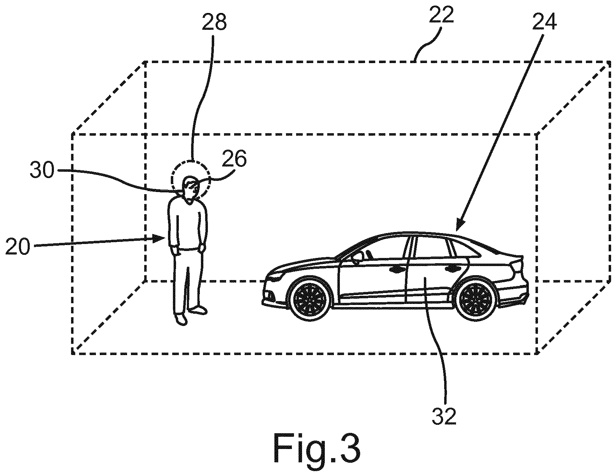

In Fig. 3 ist eine virtuelle Umgebung 22, innerhalb welcher ein virtuelles Kraftfahrzeug 24 angeordnet ist, in einer schematischen Perspektivansicht gezeigt. Die virtuelle Umgebung 22 mitsamt dem virtuellen Kraftfahrzeug 24 wird mittels der Virtual-Reality-Brille 12 angezeigt. Die Person 20, welche die Virtual-Reality-Brille 12 trägt, ist nur in Fig. 3 dargestellt, um eine virtuelle Beobachtungsposition 26 der Person 20 zu kennzeichnen, aus welcher diese mittels der Virtual-Reality-Brille 12 auf die virtuelle Umgebung 22 und das virtuelle Kraftfahrzeug 24 blickt. Die Person 20 bekommt also gemäß der vorliegenden Darstellung das virtuelle Kraftfahrzeug 24 gerade mittels der Virtual-Reality-Brille 12 von schräg links vorne dargestellt.

Mittels der Erfassungseinrichtung 16 wird fortlaufend die Position und Ausrichtung der Virtual-Reality-Brille 12 ermittelt. In Abhängigkeit von der gerade erfassten Position der Virtual-Reality-Brille 12 gibt die Steuereinrichtung 14 die virtuelle Beobachtungsposition 26 vor, aus welcher die Virtual-Reality-Brille 12 die virtuelle Umgebung 22 anzeigt. Darüber hinaus wird mittels der Erfassungseinrichtung 16 auch fortlaufend die Ausrichtung der Virtual-Reality-Brille 12 erfasst. In Abhängigkeit von der erfassten Ausrichtung der Virtual-Reality-Brille 12 legt die Steuereinrichtung 14 fortlaufend eine virtuelle Kopfausrichtung und dadurch auch eine Art virtuelle Blickrichtung auf das virtuelle Kraftfahrzeug 24 fest, entsprechend welcher die Virtual-Reality-Brille 12 die virtuelle Umgebung 22 und das darin angeordnete virtuelle Kraftfahrzeug 24 anzeigt.

Geht die Person 20 also innerhalb des Erfassungsbereichs 18 umher, so geht sie virtuell auch innerhalb der virtuellen Umgebung 22 umher, wodurch sie beispielsweise das angezeigte virtuelle Kraftfahrzeug 24 umrunden kann. Verschwenkt die Person 20 ihren Kopf, so verschwenkt die Person 20 innerhalb der virtuellen Umgebung 22 ebenfalls ihren Kopf, in Folge dessen sie ihren Blick auch virtuell entlang des virtuellen Kraftfahrzeugs 24 schweifen lassen kann.

Die Steuereinrichtung 14 gibt darüber hinaus einen virtuellen Hüllkörper 28 vor, der die virtuelle Beobachtungsposition 26 umgibt. Im vorliegend gezeigten Ausführungsbeispiel ist der virtuelle Hüllkörper 28 als Kugel ausgebildet, welche einen virtuellen Kopf 30 der Person 20 und somit auch die virtuelle Beobachtungsposition 26, welche quasi der virtuellen Augenposition der Person 20 innerhalb der virtuellen Umgebung 22 entspricht, umschließt. Der kugelförmige Hüllkörper 28 kann dabei beispielsweise konzentrisch um die virtuelle Beobachtungsposition 26 oder auch konzentrisch um den virtuellen Kopf 30 der Person 20 angeordnet sein.

Entgegen der vorliegenden Darstellung könnte es beispielsweise sein, dass eine Tür 32 des virtuellen Kraftfahrzeugs 24 aufgeschwenkt ist. Bewegt sich nun die Person 20 innerhalb der virtuellen Umgebung 22 zu nah an die aufgeschwenkte Tür 32 heran, könnte es vorkommen, dass die Person 20 innerhalb der virtuellen Umgebung 22 mit der Tür 32 kollidiert oder durch diese hindurchtritt.

Um die Person 20 rechtzeitig darauf hinzuweisen, dass sie gerade im Begriff ist, mit der Tür 32 zu kollidieren, ist es vorgesehen, dass solange ein Teil des virtuellen Kraftfahrzeugs 24 in den virtuellen Hüllkörper 28 eingetaucht ist, dieser Teil zumindest teiltransparent angezeigt wird. Im Falle der Tür 32 würde dies bedeuten, dass der Teil der Tür 32 zumindest teiltransparent angezeigt wird, welcher in den Hüllkörper 28 eintaucht. Dabei kann es beispielsweise vorgesehen sein, dass der Teil der Tür 32 umso transparenter angezeigt wird, je weiter dieser in den Hüllkörper 28 eintaucht. Alternativ kann es aber auch vorgesehen sein, dass die Transparenz des Teils der Tür 32 von einem eine Grenze des Hüllkörpers 28 schneidenden Bereich zu einem am tiefsten in den Hüllkörper 28 eintauchenden Bereich immer stärker zunehmend angezeigt wird. Mit anderen Worten ist es also auch möglich, dass am Beispiel der Tür 32, der Teil der Tür 32, immer transparenter angezeigt wird, je stärker er in dem Hüllkörper 28 hineinragt.

Darüber hinaus kann es vorgesehen sein, dass sobald der Teil der Tür 32 eine vorgegebene Eintauchtiefe in den Hüllkörper 28 überschreitet, die gesamte Tür 32 vollständig ausgeblendet wird. Durch das teilweise transparente Anzeigen desjenigen Teils der Tür 32, welcher in den Hüllkörper 28 eintaucht, wird die Person 20 rechtzeitig darüber in Kenntnis gesetzt, dass sie gleich im Begriff ist, mit der Tür 32 des virtuellen Kraftfahrzeugs 24 zu kollidieren. Spätestens wenn die gesamte Tür 32 aufgrund des zu tiefen Eintauchens der Tür 32 in den Hüllkörper 28 ausgeblendet wird, erhält die Person 20 eine sehr deutliche visuelle Warnung, dass sie gleich im Begriff ist, mit der Tür 32 zu kollidieren.

Die am Beispiel der Tür 32 des virtuellen Kraftfahrzeugs 24 erläuterte Vorgehensweise kann auf sämtliche anderen Teile des virtuellen Kraftfahrzeugs 24 in analoger Weise übertragen werden.

Die Größe, also die Abmaße des Hüllkörpers 28, wird dabei unterschiedlich vorgegeben, je nachdem ob die Person 20 innerhalb des virtuellen Kraftfahrzeugs 24 sitzt oder - wie in Fig. 3 angedeutet - in einer Außenansicht auf das virtuelle Kraftfahrzeug 24 blickt. Falls das virtuelle Kraftfahrzeug 24 mittels der Virtual-Reality-Brille 12 in einer Innenansicht angezeigt wird, wird der Hüllkörper 28 kleiner vorgegeben, als wenn das virtuelle Kraftfahrzeug 24 in einer Außenansicht angezeigt wird. Denn sitzt die Person 20 virtuelle im virtuellen Kraftfahrzeug 24, so können auch kleine reale Bewegungen der Person 20 schon ausreichen, um mit Bauteilen des virtuellen Kraftfahrzeugs 24, wie beispielsweise einem Lenkrad, einem Armaturenbrett oder dergleichen, zu kollidieren.

Befindet sich die Person 20 hingegen außerhalb vom virtuellen Kraftfahrzeug 24, so hat sie üblicherweise im Vergleich mit einer virtuellen Innenansicht einen größeren Bewegungsspielraum, bevor sie mit Komponenten des virtuellen Kraftfahrzeugs 24 kollidiert. Durch entsprechende Anpassung der Größe des virtuellen Hüllkörpers 28 wird diesem Umstand Rechnung getragen, so dass die Person 20 einerseits immer noch rechtzeitig darüber in Kenntnis gesetzt wird, wenn sie gerade im Begriff ist, mit einem Teil des virtuellen Kraftfahrzeugs 24 zu kollidieren, wobei gleichzeitig verhindert wird, dass durch zu vorzeitiges Teiltransparentschalten von Komponenten des virtuellen Kraftfahrzeugs 24 die realitätsnahe Darstellung und Wahrnehmung des virtuellen Kraftfahrzeugs 24 geschmälert wird.

## Patentansprüche

1. Verfahren zum Betreiben eines Virtual-Reality-Systems (10), mit den Schritten:
- Erfassen einer Position einer Virtual-Reality-Brille (12) mittels einer Erfassungseinrichtung (16);
- Vorgeben einer virtuellen Beobachtungsposition (26) in Abhängigkeit von der erfassten Position der Virtual-Reality-Brille (12);
- Anzeigen eines in einer virtuellen Umgebung (22) angeordneten virtuellen Objekts (24) aus der virtuellen Beobachtungsposition (26) mittels der Virtual-Reality-Brille (12);
**dadurch gekennzeichnet, dass**
ein virtueller Hüllkörper (28) vorgegeben wird, der die virtuelle Beobachtungsposition (26) zumindest teilweise umgibt, wobei solange ein Teil des virtuellen Objekts (24) in den virtuellen Hüllkörper (28) eingetaucht ist, dieser Teil zumindest teiltransparent angezeigt wird, wobei der gesamte Teil des virtuellen Objekts (24) umso transparenter angezeigt wird, je weiter dieser in den Hüllkörper (28) eintaucht, oder die Transparenz des Teils des virtuellen Objekts (24) von einem eine Grenze des Hüllkörpers (28) schneidenden Bereich zu einem am tiefsten in den Hüllkörper (28) eintauchenden Bereich immer stärker zunehmend angezeigt wird.

2. Verfahren nach Anspruch 1,
**dadurch gekennzeichnet, dass**
der virtuelle Hüllkörper (28) kugelförmig vorgegeben wird, wobei der Mittelpunkt des Hüllkörpers (28) an der virtuellen Beobachtungsposition (26) angeordnet wird.

3. Verfahren nach einem der vorhergehenden Ansprüche,
**dadurch gekennzeichnet, dass**
sobald der Teil des virtuellen Objekts (24) eine vorgegebene Eintauchtiefe in den Hüllkörper (28) überschreitet, ein Bauteil oder eine Baugruppe, zu welchem/welcher der Teil des virtuellen Objekts (24) gehört, vollständig ausgeblendet wird.

4. Verfahren nach einem der vorhergehenden Ansprüche,
**dadurch gekennzeichnet, dass**
als das virtuelle Objekt (24) eine virtuelles Kraftfahrzeug angezeigt wird.

5. Virtual-Reality-System (10), mit
- einer Virtual-Reality-Brille (12);
- einer Erfassungseinrichtung (16), welche dazu ausgelegt ist, eine Position der Virtual-Reality-Brille (12) zu erfassen;
- einer Steuereinrichtung (14), welche dazu ausgelegt ist,
• eine virtuelle Beobachtungsposition (26) in Abhängigkeit von der erfassten Position der Virtual-Reality-Brille (12) vorzugeben;
• die Virtual-Reality-Brille (12) derart anzusteuern, dass mittels dieser ein in einer virtuellen Umgebung (22) angeordnetes virtuelles Objekt (24) aus der virtuellen Beobachtungsposition (26) angezeigt wird;
**dadurch gekennzeichnet, dass**
die Steuereinrichtung (14) dazu ausgelegt ist,
- einen virtuellen Hüllkörper (28), der die virtuelle Beobachtungsposition (26) zumindest teilweise umgibt, vorzugeben;
- die Virtual-Reality-Brille (12) derart anzusteuern, dass solange ein Teil des virtuellen Objekts (24) in den virtuellen Hüllkörper (28) eingetaucht ist, dieser Teil zumindest teiltransparent angezeigt wird;
- die Virtual-Reality-Brille (12) derart anzusteuern, dass der gesamte Teil des virtuellen Objekts (24) umso transparenter angezeigt wird, je weiter dieser in den Hüllkörper (28) eintaucht, oder die Transparenz des Teils des virtuellen Objekts (24) von einem eine Grenze des Hüllkörpers (28) schneidenden Bereich zu einem am tiefsten in den Hüllkörper (28) eintauchenden Bereich immer stärker zunehmend angezeigt wird.

## Claims

1. Method for operating a virtual reality system (10), having the steps:
- detecting a position of a virtual reality pair of spectacles (12) by means of a detecting apparatus (16);
- predetermining a virtual observation position (26) depending on the detected position of the virtual reality pair of spectacles (12);
- displaying a virtual object (24) disposed in a virtual environment (22) from the virtual observation position (26) by means of the virtual reality pair of spectacles (12);
**characterised in that**
a virtual casing body (28) is predetermined which surrounds at least partially the virtual observation position (26), wherein as long as a part of the virtual object (24) is immersed into the virtual casing body (28) this part is displayed as at least partially transparent, wherein the entire part of the virtual object (24) is shown as the more transparent, the further it immerses into the casing body (28), or the transparency of the part of the virtual object (24) is displayed increasingly more pronounced from a region cutting a boundary of the casing body (28) to a region immersing most deeply into the casing body (28).

2. Method according to claim 1,
**characterised in that**
the virtual casing body (28) is predetermined as spherical, wherein the midpoint of the casing body (28) is disposed at the virtual observation position (26).

3. Method according to any of the preceding claims,
**characterised in that**
as soon as the part of the virtual object (24) exceeds a predetermined immersion depth into the casing body (28), a component or a component assembly, to which the part of the virtual object (24) belongs, is completely hidden.

4. Method according to any of the preceding claims,
**characterised in that**
a virtual motor vehicle is displayed as the virtual object (24).

5. Virtual reality system (10), having
- a virtual reality pair of spectacles (12);
- a detecting apparatus (16) which is designed to detect a position of the virtual reality pair of spectacles (12);
- a control device (14) which is designed
- to specify a virtual observation position (26) depending on the detected position of the virtual reality pair of spectacles (12);
- to control the virtual reality pair of spectacles (12) such that by using it a virtual object (24) disposed in a virtual environment (22) is displayed from the virtual observation position (26);
**characterised in that**
the control device (14) is designed
- to specify a virtual casing body (28) which at least partially surrounds the virtual observation position (26);
- to control the virtual reality pair of spectacles (12) such that as long as a part of the virtual object (24) is immersed into the virtual casing body (28) this part is displayed as at least partially transparent;
- to control the virtual reality pair of spectacles (12) such that the entire part of the virtual object (24) is shown as the more transparent, the further it immerses into the casing body (28), or the transparency of the part of the virtual object (24) is displayed increasingly more pronounced from a region cutting a boundary of the casing body (28) to a region immersing most deeply into the casing body (28).

## Revendications

1. Procédé pour faire fonctionner un système de réalité virtuelle (10), avec les étapes consistant à :
- détecter une position de lunettes de réalité virtuelle (12) au moyen d'un dispositif de détection (16) ;
- prédéfinir une position d'observation virtuelle (26) en fonction de la position détectée de lunettes de réalité virtuelle (12) ;
- afficher un objet virtuel (24) disposé dans un environnement virtuel (22) à partir de la position d'observation virtuelle (26) au moyen des lunettes de réalité virtuelle (12) ;
**caractérisé en ce**
**qu'**un volume englobant (28) virtuel est prédéfini, qui entoure au moins partiellement la position d'observation virtuelle (26), dans lequel tant qu'une partie de l'objet virtuel (24) est enfoncée dans le volume englobant (28) virtuel, cette partie est affichée de façon au moins partiellement transparente, dans lequel la partie totale de l'objet virtuel (24) est affichée de façon d'autant plus transparente que celle-ci s'enfonce dans le volume englobant (28), ou la transparence de la partie de l'objet virtuel (24) est affichée de façon toujours plus forte d'une zone coupant une limite du volume englobant (28) à une zone enfoncée le plus profondément dans le volume englobant (28).

2. Procédé selon la revendication 1,
**caractérisé en ce que**
le volume englobant (28) virtuel est prédéfini de façon sphérique, dans lequel le point médian du volume englobant (28) est disposé au niveau de la position d'observation virtuelle (26).

3. Procédé selon l'une quelconque des revendications précédentes,
**caractérisé en ce que**
dès que la partie de l'objet virtuel (24) dépasse une profondeur d'enfoncement prédéfinie dans le volume englobant (28), un composant ou un assemblage auquel appartient la partie de l'objet virtuel (24) est complètement masqué.

4. Procédé selon l'une quelconque des revendications précédentes,
**caractérisé en ce**
**qu'**un véhicule automobile virtuel est affiché en tant qu'objet virtuel (24).

5. Système de réalité virtuelle (10) avec
- des lunettes de réalité virtuelle (12) ;
- un dispositif de détection (16) qui est conçu pour détecter une position des lunettes de réalité virtuelle (12) ;
- un dispositif de commande (14) qui est conçu pour
• prédéfinir une position d'observation virtuelle (26) en fonction de la position détectée des lunettes de réalité virtuelle (12) ;
• commander les lunettes de réalité virtuelle (12) de telle sorte qu'au moyen de celles-ci, un objet virtuel (24) disposé dans un environnement virtuel (22) est affiché à partir de la position d'observation virtuelle (26) ;
**caractérisé en ce que**
le dispositif de commande (14) est conçu pour
- prédéfinir un volume englobant (28) virtuel qui entoure au moins partiellement la position d'observation virtuelle (26) ;
- commander les lunettes de réalité virtuelle (12) de telle sorte que tant qu'une partie de l'objet virtuel (24) est enfoncée dans le volume englobant (28) virtuel, cette partie est affichée de façon au moins partiellement transparente ;
- commander les lunettes de réalité virtuelle (12) de telle sorte que la partie totale de l'objet virtuel (24) est affichée de façon d'autant plus transparente que celle-ci s'enfonce dans le volume englobant (28), ou la transparence de la partie de l'objet virtuel (24) est affichée de façon toujours plus forte d'une zone coupant une limite du volume englobant (28) à une zone enfoncée le plus profondément dans le volume englobant (28).
